Europäisches Patentamt

European Patent Office

Office européen des brevets

(11) Publication number: **0 264 967**
A2

(12) **EUROPEAN PATENT APPLICATION**

(21) Application number: 87115691.5

(22) Date of filing: 26.10.87

(51) Int. Cl.⁴: **B29C 53/60** , B29C 53/80 ,
B29C 53/82 , //B64D37/02

(30) Priority: 24.10.86 IT 6780486

(43) Date of publication of application:
27.04.88 Bulletin 88/17

(84) Designated Contracting States:
DE ES FR GB NL

(71) Applicant: NUOVA SIAI MARCHETTI S.p.A.
Via Indipendenza, 2
I-21018 Sesto Calende(IT)

(72) Inventor: Scarpelli, Enrico
Via Piave, 2/E
I-21010 Golasecca(IT)

(74) Representative: Prato, Roberto et al
c/o Ingg. Carlo e Mario Torta Via Viotti 9
I-10121 Torino(IT)

(54) Method of producing underwing tanks from synthetic material and honeycomb.

(57) A method of producing underwing tanks from synthetic material and honeycomb, whereby a forming mandrel is fitted with two preformed end caps connected together by means of synthetic layered material covered externally with honeycomb, so as to form a casing which, after being oven-cured to render it self-supporting, is cut transversely, to enable extraction of the mandrel, and then bonded back together to act, itself, as a mandrel for subsequent layering and finishing operations.

Fig. 7

EP 0 264 967 A2

# METHOD OF PRODUCING UNDERWING TANKS FROM SYNTHETIC MATERIAL AND HONEYCOMB

The present invention relates to a method of producing underwing tanks from synthetic material and honeycomb. The aim of the present invention is to provide a straight-forward, low-cost method of producing the said tanks, and which, in particular, enables the use of a forming mandrel which may be salvaged and re-employed for forming further tanks.

With this aim in view, according to the present invention, there is provided a method of producing underwing tanks from synthetic material and honeycomb, characterised by the fact that it comprises stages consisting in :

-producing a forming mandrel having outside dimensions equal to the inside dimensions of the tank being produced, and comprising a substantially cylindrical center portion and two end ogives;

-producing two caps from cured synthetic material, and fitting the same over the said ogives;

-covering the said cylindrical portion of the said mandrel and part of the said caps with layers of synthetic material;

-covering the said layered synthetic material with a layer of honeycomb, and oven-curing the assembly so formed;

-removing, by means of a transverse cutting operation, one of the said two caps, and extracting the said mandrel;

-bonding the said assembly back together;

-employing the said reconstructed assembly as a mandrel for subsequent layering and finishing operations.

A non-limiting embodiment of the present invention will be described by way of example with reference to the accompanying drawings, in which :

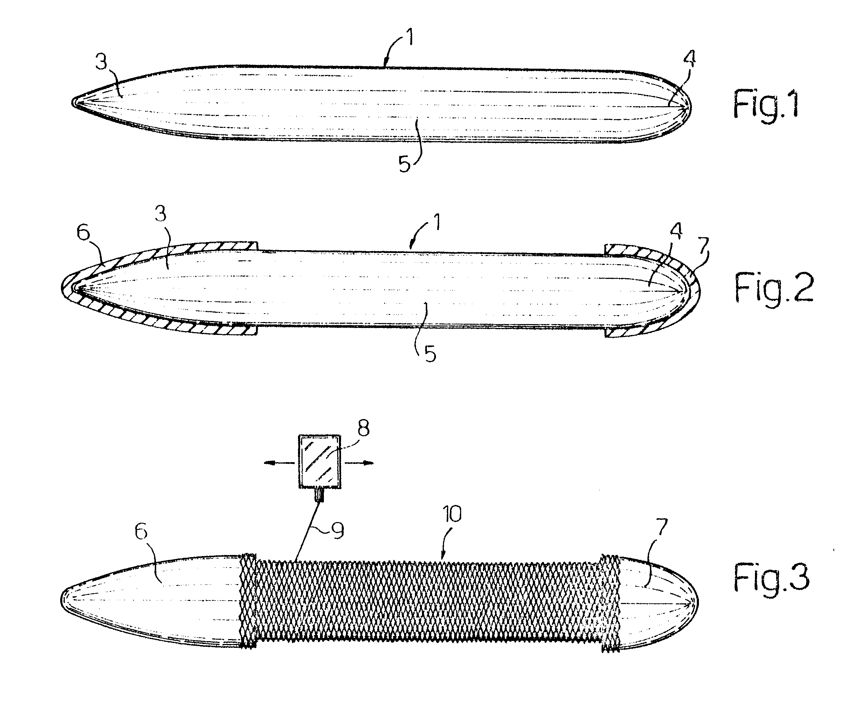

Fig.1 shows a mandrel for forming an underwing tank in accordance with the teachings of the present invention;

Fig.s 2 to 7 show schematic views of successive stages in the production of an underwing tank in accordance with the teachings of the present invention.

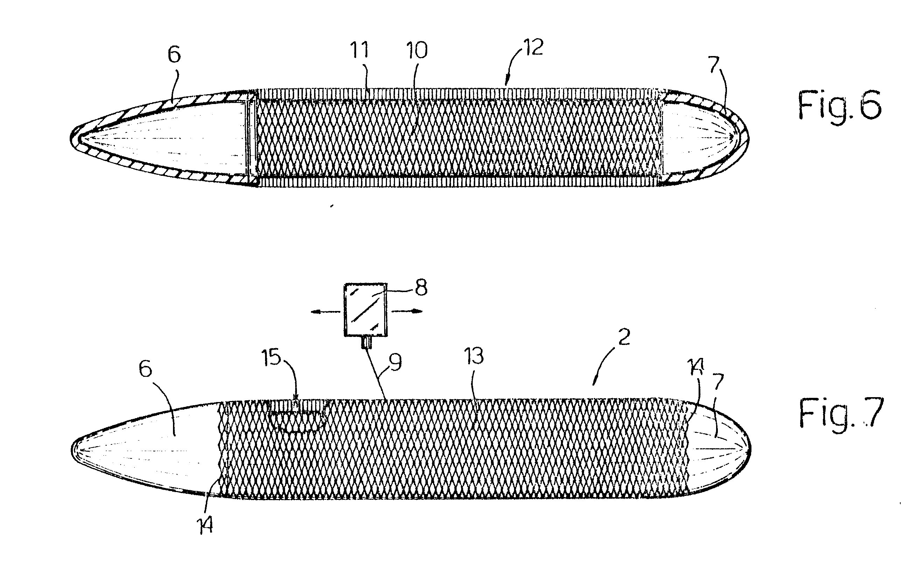

Number 1 in Fig.1 indicates a mandrel for producing an underwing tank as indicated by 2 in Fig.7, the said mandrel 1 comprising two end ogives 3 and 4 connected together by a substantially cylindrical center portion 5.

Production of tank 2 commences with the production of two caps 6 and 7 from synthetic layered material, which caps are first oven-cured and then fitted (Fig.2) over ogives 3 and 4 on mandrel 1.

By means of a mobile braiding machine 8 (Fig.3), the outer surface of center portion 5 is then covered with a continuous resin-impregnated yarn 9 so as to form a substantially cylindrical braid 10 comprising two end portions 11 covering the ends of caps 6 and 7 adjacent to the respective ends of center portion 5 of mandrel 1.

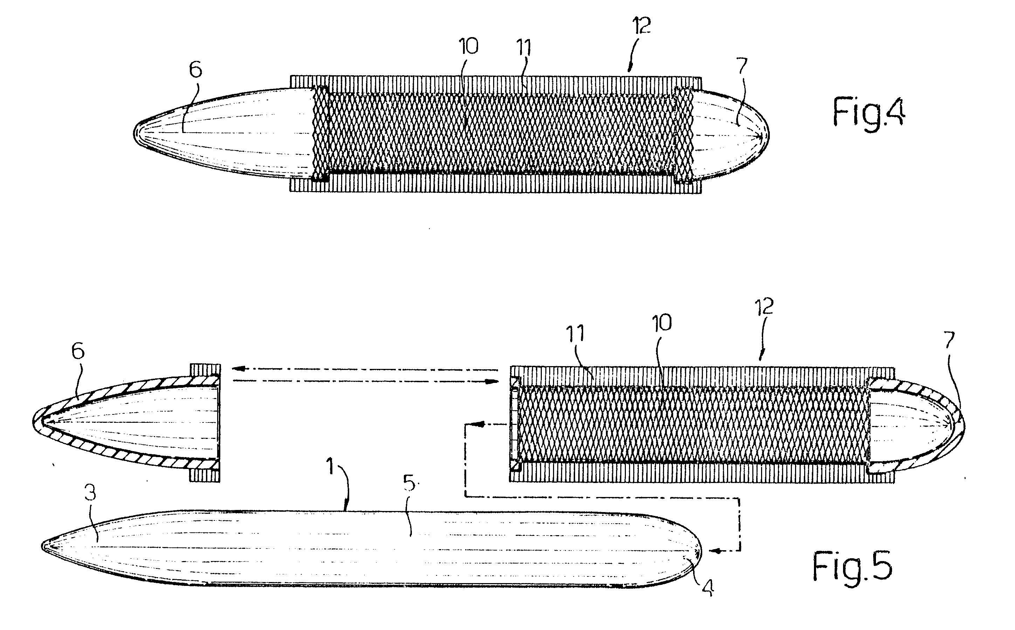

Braid 10 is then covered with a layer 11 of honeycomb (Fig.4) so as to form an assembly or casing 12 fully enclosing mandrel 1 and consisting of caps 6 and 7, braid 10 and honeycomb layer 11. After an appropriate length of time for allowing the resin impregnating yarn 9 and, consequently, part of layer 11, to gel, assembly 12 is placed in a curing oven from which it emerges in the form of a perfectly sound, self-supporting assembly.

As shown in Fig.5, assembly 12 is then cut to remove cap 6 and enable extraction of mandrel 1, which may thus be re-employed for forming another tank 2. The said cap 6 is then bonded back on to reconstruct assembly 12, which thus constitutes a self-supporting mandrel for performing further finish and layering operations as shown in Fig.s 6 and 7.

As shown in Fig.6, assembly 12 is machined for blending the outer surface of honeycomb layer 11 perfectly with the outer surface of caps 6 and 7. As shown in Fig.7, the outer surface of honeycomb layer 11 is then covered, by machine 8, with a further outer braid 13 extending over the entire length of the previous braid 10, and also comprising two end portions 14 over the outside of caps 6 and 7. Braid 13 is also formed from resin-impregnated yarn 9 which, once gelled, is oven-cured to produce the finished tank 2.

The resulting tank 2 consists of a perfectly closed casing, which is waterproofed internally, as shown by way of example in Fig.7, by forming a hole 15 through one of the casing portions in which openings (not shown) enabling access to tank 2 will be formed later. Hole 15 enables waterproofing paint to be poured inside tank 2, which paint is then evenly distributed over the inner surface of the tank by tumbling the same. Any surplus paint is allowed to drip out through hole 15 and, once the paint has dried, hole 15 is closed, leaving tank 2 ready for drilling the filling and service openings (not shown).

## Claims

1) - A method of producing underwing tanks from synthetic material and honeycomb, characterised by the fact that it comprises stages consisting in :

-producing a forming mandrel having outside dimensions equal to the inside dimensions of the tank being produced, and comprising a substantially cylindrical center portion and two end ogives;

-producing two caps from cured synthetic material, and fitting the same over the said ogives;

-covering the cylindrical portion of the said mandrel and part of the said caps with layers of synthetic material;

-covering the said layered synthetic material with a layer of honeycomb, and oven-curing the assembly so formed;

-removing, by means of a transverse cutting operation, one of the said two caps, and extracting the said mandrel;

-bonding the said assembly back together;

-employing the said reconstructed assembly as a mandrel for subsequent layering and finishing operations.

2) - A method as claimed in Claim 1, characterised by the fact that each said layer of synthetic material comprises the formation of a braid of resin-impregnated yarn, extending along the said cylindrical portion of the said mandrel and along portion of the said caps adjacent to the said cylindrical portion.

3) - A method as claimed in Claim 2, characterised by the fact that the said braids are two in number, one located inside and the other outside the said honeycomb layer.

4) - A method as claimed in any one of the foregoing Claims, characterised by the fact that the said subsequent finish operations comprise mechanical machining of the said honeycomb layer.

5) - A method as claimed in any one of the foregoing Claims, characterised by the fact that the said subsequent finish operations comprise waterproofing the inner surface of the said tank.

6) - A method as claimed in Claim 5, characterised by the fact that the said waterproofing operation comprises stages consisting in :

-forming a hole through the said tank;

-pouring waterproofing paint through the said hole;

-distributing the said paint over the said inner surface by tumbling the said tank; and

-allowing any surplus said paint to drip out of the said tank through the said hole.

Fig.1

Fig.2

Fig.3

0 264 967

Fig.4

Fig.5

Fig.6

Fig.7

0 264 967